# EUROPEAN PATENT SPECIFICATION

(11) **EP 1 457 658 B1**
(45) Date of publication and mention of the grant of the patent: **21.06.2006**
(21) Application number: 04005907.3
(22) Date of filing: 12.03.2004
(51) Int. Cl.: F02F 7/00, F16C 9/02

(54) **Bearing member manufacturing method**
Verfahren zur Herstellung eines Lagerteils
Procédé de fabrication d'un élément de palier

(30) Priority: 13.03.2003 JP 2003068070
(43) Date of publication of application: 15.09.2004
(73) Proprietor: HONDA MOTOR CO., Ltd., Tokyo (JP)
(72) Inventor: Takahashi, Masayuki, Wako-shi, Saitama (JP); Midorikawa, Teruaki, Wako-shi, Saitama (JP); Suzuki, Shigeru, Wako-shi, Saitama (JP); Ogawa, Hideharu, Wako-shi, Saitama (JP); Moriyama, Takachika, Wako-shi, Saitama (JP)
(74) Representative: Prechtel, Jörg

(56) References cited:
- DE-A1- 19 704 131
- US-A- 3 089 735
- US-A- 4 684 267
- US-A- 5 733 049
- US-A1- 2002 020 287

## Description

The present invention relates to a bearing member manufacturing method of manufacturing a bearing member for rotatably supporting a rotational shaft. The bearing member is intended to be included in a bearing mechanism for supporting a rotational shaft, such as the crankshaft of an internal combustion engine.

Most bearing members for rotatably supporting the crankshafts of internal combustion engines are formed of a material different from that forming the crankshafts and are formed of a light alloy in view of achieving weight reduction. A gap is formed between the crankshaft and the bearing member due to the difference in thermal expansion between the bearing member and the crankshaft when the crankshaft operates in a hot atmosphere heated by combustion heat generated by the internal combustion engine, causing generation of vibration and noise.

Various bearing members formed of light alloys and capable of reducing the gap due to the difference in thermal expansion have been provided. A bearing cap (or a crankshaft lower case) disclosed in JP 2002-61538 A has a surface layer, i.e., a surface part formed of an aluminum alloy that comes into sliding contact with the journal of a crankshaft, and a framing part of an aluminum composite material framing the surface part of the aluminum alloy. The aluminum composite material has a coefficient of thermal expansion greater than that of an iron alloy forming the crankshaft and smaller than that of the aluminum alloy forming the surface part. Therefore, the gap between the crankshaft and the bearing cap (or the crankshaft lower case) due to the difference in thermal expansion between the crankshaft and the bearing cap (or the crankshaft lower case) is small and hence noise and vibration are reduced. To form this bearing cap (or this crankshaft lower case), a preform is prepared by compressing a mixture prepared by mixing particles or fibers, and an additive, such as silicon dioxide, the preform is placed in a mold, and then a molten aluminum alloy is poured for die casting into the mold. Thus, the preform is impregnated with the aluminum alloy to form a framing part of the aluminum composite material. Then, a surface part of an aluminum alloy is formed on the framing part to complete the bearing cap (or the crankshaft lower case).

The technique relating to the bearing cap (or the crankshaft lower case) disclosed in JP 2002-61538 A needs a casting machine provided with a mold forming one bearing cap (or the crankshaft lower case) having a semicylindrical recess by integrally combining the surface part and the framing part. Therefore, the bearing cap (or the crankshaft lower case) is costly. Since the impregnation of the preform having a volume greater than the surface part with the aluminum alloy and the formation of the surface layer of the aluminum alloy need to be achieved simultaneously, it is difficult to ensure smooth flow of the molten aluminum alloy to impregnate the preform entirely with the molten aluminum alloy and to form the surface part of the aluminum alloy. Consequently, bearing caps (or crankshaft lower cases) are liable to differ from each other in quality.

The present invention has been made in view of the foregoing problems and it is therefore an obj ect of the present invention to provide a baring member manufacturing method of manufacturing a bearing member formed of light alloys and having stable ability to support a rotational shaft, capable of manufacturing the bearing member at low cost.

According to the present invention, there is provided a bearing member manufacturing method of manufacturing a bearing member having a body part formed of a first material of a light alloy, and a bearing part formed of a second material of a light-alloy-base material different from that forming the body part, having a bearing surface of a semicircular cross section and integrally combined with the body part,
characterized in that the manufacturing method includes: a casting step of forming a primary workpiece having at least one semifinished workpiece including one first workpiece having a cylindrical inside surface serving as the bearing surface, and one second workpiece by integrally combining the first workpiece and the second workpiece in a mold by casting; and a dividing step of dividing the primary workpiece removed from the mold into halves along a center plane including a center axis of the inside surface to obtain two secondary workpieces for forming two bearing members.

Since the two secondary workpieces for forming the two bearing members are formed by dividing the cast semifinished workpiece into halves, it is not necessary to use one mold for forming one bearing member. The two secondary workpieces can be formed by dividing the single semifinished workpiece formed by combining the single semifinished body part made of the first material, i.e., the light alloy, and the single semifinished bearing part having a circular hole and made of the second material, i.e., the light alloy in half, the quality range in which the qualities of the secondary workpieces are distributed can be narrowed.

Thus, the present invention has the following effects. The bearing member manufacturing method needs a reduced number of molds for forming bearing members, is capable of manufacturing bearing members at an improved yield, and reduces the cost of the lightweight bearing members formed of two types of light alloys. Since quality range in which the qualities of the secondary workpieces are distributed is narrowed and hence qualities of the bearing members are distributed in the narrow quality range, the bearing members exercise a stable supporting function.

The bearing member manufacturing method according to the present invention may include a first workpiece forming step of forming the cylindrical first workpiece of the second material, wherein the casting step includes steps of placing at least one of the first workpiece formed by the first workpiece forming process in the mold, pouring the molten first material into the mold and metallurgically bonding together the first workpiece and the second workpiece along the interface between the first workpiece and the second workpiece.

Since the first workpiece is formed before being combined with the second workpiece by casting, and the first workpiece and the second workpiece are metallurgically bonded together along the interface, the first and the second workpiece can be firmly bonded together, and the variation of the quality of the semifinished workpiece attributable to enclosing the first workpiece in the second workpiece by casting can be suppressed.

Consequently, the following effect is provided. Since the variation of the quality of the semifinished workpiece is suppressed, the function of the bearing member to support a rotational shaft can be stabilized.

The bearing member manufacturing method according to the present invention is able to form a cavity for forming the second workpiece around the first workpiece in the mold and to introduce the molten first material into the cavity through parts of the mold corresponding to four corners of the semifinished workpiece having a substantially square cross section as viewed along the center axis.

Since the molten first alloy flows through the parts of the mold corresponding to the four corners of the semifinished workpiece having a substantially square shape into the cavity, the molten first material flows uniformly around the first workpiece in the cavity, and thereby the quality of the semifinished workpiece and hence that of the secondary workpiece can be improved, which is effective in stabilizing the function of the bearing member to support a rotational shaft.

Desirably, the molten first metal is poured into the cavity so as to flow in a swirling current in the cavity. The swirling molten first metal can uniformly spread in the cavity.

The first material may be an aluminum alloy, and the second material may be an aluminum alloy having a high silicon content.

The bearing member manufacturing method according to the present invention may further include a casting step of forming a primary workpiece including a predetermined number of semifinished workpieces axially arranged such that at least second workpieces included in the semifinished workpieces are continuously arranged in a direction parallel to the center plane, and a dividing step of dividing the primary workpiece along a plane perpendicular to the direction perpendicular to the center plane of the primary workpiece into the predetermined number of semifinished workpieces.

Since the predetermined number of semifinished workpieces can be simultaneously formed in the mold, the number of necessary molds can be further decreased. Since a number of secondary workpieces twice the number of the semifinished workpieces can be formed from the single primary workpiece, the quality range in which the qualities of the secondary workpieces are distributed can be further narrowed. Consequently, effects on reducing the cost of the bearing member and on the stabilization of the function to support a rotational shaft can be further promoted.

The bearing member manufacturing method according to the present invention may further include a casting step of forming the primary workpiece including a predetermined number of semifinished workpieces arranged in a direction perpendicular to the center axis included in the center plane such that the second workpieces are continuously arranged in a direction perpendicular to the center axis in the center plane, and a dividing step of dividing the primary workpiece along a plane perpendicular to the direction perpendicular to the center axis in the center plane into the predetermined number of semifinished workpieces.

Thus, the same effect as that mentioned above is provided. Since a number of secondary workpieces twice the predetermined number can be simultaneously formed from the single primary workpiece, the quality range in which the qualities of the secondary workpieces are distributed can be further narrowed. Consequently, effects on reducing the cost of the bearing member and on the stabilization of the function to support a rotational shaft can be further promoted.

In this specification, "section" signifies a section taken on a plane perpendicular to the center axis of the bearing part unless otherwise specified.

In the drawings:
Fig. 1 is a cross-sectional view of an essential part of an internal combustion engine provided with a bearing mechanism including a bearing cap provided with a bearing member fabricated by a bearing member manufacturing method in a first embodiment of the present invention;
Fig. 2 is a perspective view of the bearing cap of the bearing mechanism shown in Fig. 1;
Fig. 3A is a schematic sectional view of part of an extruder for forming a bearing part included in the bearing cap shown in Fig. 2;
Fig. 3B is a perspective view of assistance in explaining a method of forming a support member by processing a workpiece formed by the extruder;
Fig. 4 is a side elevation of a sand mold for casting a primary workpiece for forming the bearing cap shown in Fig. 3, part of which being a sectional view taken on the line IV-IV in Fig. 5A;
Fig. 5A is a view taken in the direction of the arrows on the line VA-VA in Fig. 4;
Fig. 5B is a view taken in the direction of the arrows on the line VB-VB in Fig. 4;
Fig. 6A is a perspective view of a primary workpiece molded by using the sand mold shown in Fig. 4;
Fig. 6B is a perspective view of secondary workpieces formed by splitting the primary workpiece shown in Fig. 6A;
Fig. 7 is a perspective view, corresponding to Fig. 3B, of assistance in explaining a bearing member manufacturing method in a second embodiment of the present invention;
Fig. 8 is a side elevation, corresponding to Fig. 1, of assistance in explaining the bearing member manufacturing method in the second embodiment;
Fig. 9A is a perspective view of a primary workpiece cast in the sand mold shown in Fig. 8;
Fig. 9B is a perspective view of secondary workpieces formed by splitting the primary workpiece shown in Fig. 9A;
Fig. 10A is a perspective view of primary workpiece molded by using a sand mold of assistance in explaining a bearing member manufacturing method in a third embodiment of the present invention; and
Fig. 10B is a perspective view of secondary workpieces formed by splitting the primary workpiece shown in Fig. 10A

Preferred embodiments of the present invention will be described with reference to the accompanying drawings.

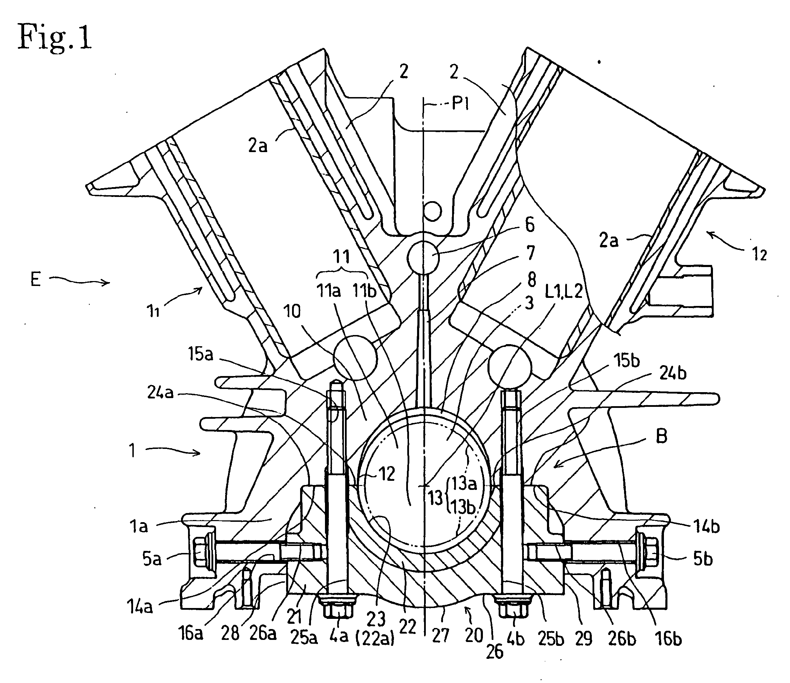

Figs. 1 to 6 are views explaining a bearing member manufacturing method in a first embodiment of the present invention. Referring to Fig. 1, a bearing cap 20, i.e., a bearing member, is included in a crankshaft bearing mechanism for rotatably supporting a crankshaft 3 included in an internal combustion engine E. The internal combustion engine E is a V-type 6-cylinder four-stroke cycle internal combustion engine having a cylinder block 1 with two cylinder rows 1₁ and 1₂ of three cylinders 2 forming a pair of cylinder banks. Pistons, not shown, are slidably fitted in the cylinder bores 2a of the cylinders 2 of the cylinder rows 1₁ and 1₂. The pistons are driven for reciprocation in the cylinder bores 2a by combustion pressure produced in combustion chambers defined by the pistons and a pair of cylinder heads, not shown, joined to the upper ends of the two cylinder rows 1₁ and 1₂. The reciprocating pistons drive the crankshaft 3 for rotation through connecting rods.

In the following description, the term, 'vertical direction' signifies a direction in which a plane P1 of symmetry with respect to which the bearing surface 23 of the bearing cap 20 is symmetrical in a view taken in the direction of the center axis L1 of the crankshaft 3 (hereinafter, referred to as "axial direction"). Fig. 1 is a view of the internal combustion engine E taken in the axial direction. The bearing surface 23 opens upward.

The crankshaft 3 operates in a high-temperature atmosphere heated by combustion heat generated by the internal combustion engine E. The crankshaft 3 is disposed in a crankcase formed by the skirt 1a of the deep-skirt type cylinder block 1, and an oil pan fitted on the skirt 1a. The crankshaft bearing mechanism includes four bearing assemblies B arranged in the crankcase. The journals of the crankshaft 3 are supported in the four bearing assemblies B to support the crankshaft 3 for rotation on the cylinder block 1, i.e., a main component of the internal combustion engine E. Only one of the bearing assemblies B is shown in Fig. 1.

The bearing assemblies B have the same basic construction. Each of the bearing assemblies B has a bearing wall 10, i.e., a first bearing member, formed integrally with the cylinder block 1, and the bearing cap 20, i.e., a second bearing member, fastened to the bearing wall 10 with two vertical bolts 4a and 4b. A bearing 13 is fitted in a bearing hole 11 having a circular cross section formed in the bearing mechanism B formed by joining the bearing cap 20 to the bearing wall 10, and the journal of the crankshaft 3 is supported in the bearing 13.

The bearing 13 is divided into an upper half bearing 13a and a lower half bearing 13b. The bearing wall 10 forms a semicircular hollow 11a having a bearing surface 12 and opening toward the baring cap 20. The upper half bearing 13a of the bearing 13 is held on the bearing surface 12. The bearing cap 20 forms a semicircular hollow 11b having a bearing surface 23 opening toward the bearing wall 10. The lower half bearing 13b of the bearing 13 is held on the bearing surface 23.

The bearing cap 20 is fastened to the bearing wall 10 with the two bolts 4a and 4b, and to the skirt 1a with two horizontal auxiliary bolts 5a and 5b. The bearing hollows 11a and 12b forms the circular bearing hole 11. A pair of joining surfaces 24a and 24b of the bearing cap 20 on the opposite sides, respectively, of the bearing hole 11 are joined to a pair of joining surfaces 14a and 14b of the bearing wall 10 on the opposite sides, respectively, of the bearing hole 11, respectively.

A circular oil passage 8 is formed in the bearing surface 12 to supply lubricating oil into clearances between the bearing mechanism B, and between the bearing metal 13 and the journal of the crankshaft 3. The lubricating oil discharged from an oil pump driven by the crankshaft 3 flows through an oil filter, an oil gallery 6 formed in the cylinder block 1 and an oil passage 7 into the oil passage 8.

The crankshaft 3 is formed of an iron-base material having a coefficient of linear expansion of about 12×10⁻⁶/K. The cylinder block having the bearing wall 10 is formed of a light-metal-base material, such as an aluminum alloy, having a coefficient of linear expansion of about 22×10⁻⁶/K.

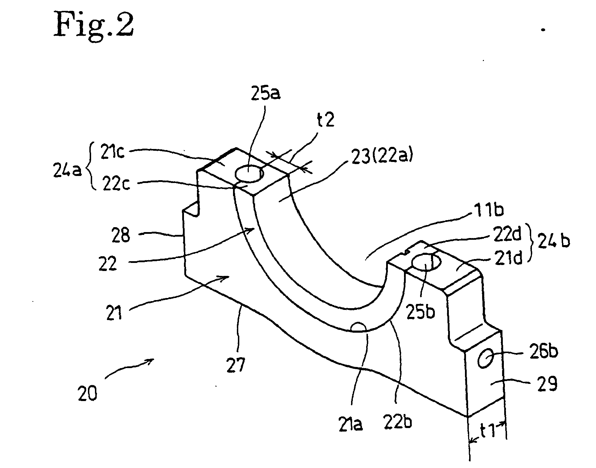

Referring to Figs. 1 and 2, the bearing cap 20 has a cap body 21 of a first material, which is a light-metal-base material, and a semicylindrical bearing part 22 formed of a second material, whch is a light-metal-base material different from the first material, and integrally combined with the cap body 21. The bearing part 22 has an inner surface 22a serving as the bearing surface 23 for bearing the journal of the crankshaft 3.

The first material is an aluminum alloy similar to a material forming the cylinder block 1 and has a coefficient of linear expansion of about 22×10⁻⁶/K. The second material is an aluminum alloy having, for example, a high Si content. The second material has a coefficient of linear expansion closer to that of the material forming the crankshaft 3 than that of the first material.

The cap body 21 and the bearing part 22 are combined by casting such that the semicylindrical inner surface 21a of the cap body 21 and the semicylindrical outer surface 22b of the bearing part 22 are metallurgically bonded together.

The bearing part 22 has the shape of a semicylinder formed by dividing a cylinder having a predetermined length t1 and a predetermined thickness t2 into halves along a plane including the center axis L2 of the cylinder. Joining surfaces 22c and 22d extends on the opposite sides, respectively, of the semicircular hollow 11b.

The cap body 21 has a length t1 and covers the semicircular hollow 11b of the bearing part 22. The cap body 21 has joining surfaces 21c and 21d flush with the joining surfaces 22c and 22d and extending radially outward from the joining surfaces 22c and 22d, respectively. The joining surfaces 21c and 22c form the joining surface 24a, and the joining surfaces 21d and 22d form the joining surface 24b.

Through holes 25a and 25b are formed in the cap body 21 and the bearing part 22. The through holes 25a and 25b open in the joining surfaces 24a and 24b, and the lower surface 26 of the bearing cap 20. The bolts 4a and 4b are passed through and are screwed in threaded holes 15a and 15b formed in the bearing wall 10. Threaded holes 26a and 26b are formed in the cap body 21. The auxiliary bolts 5a and 5a are passed through through holes 16a and 16b formed in the skirt 1a and are screwed in the threaded holes 26a and 26b.

The bearing member manufacturing method of manufacturing the bearing cap 20 shown in Fig. 2 will be described.

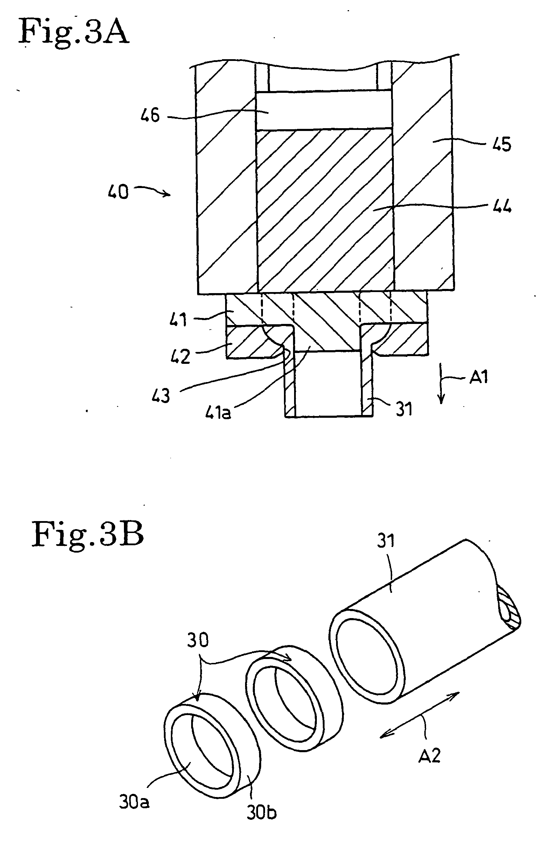

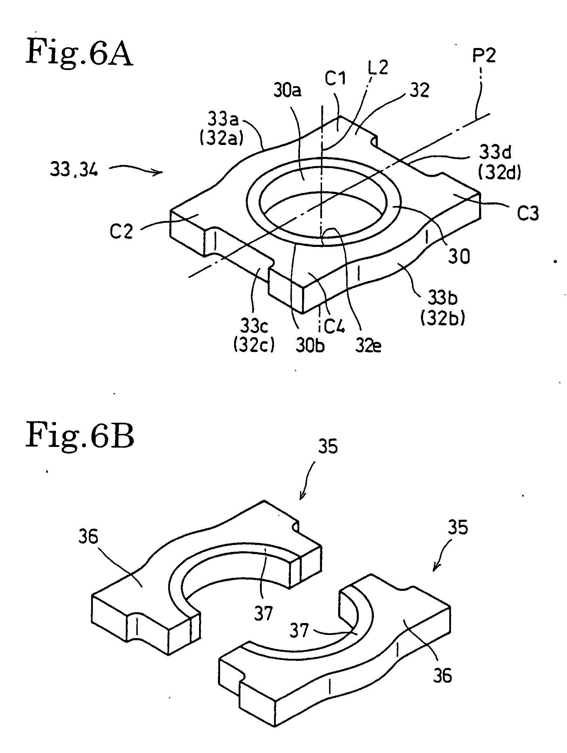

A short, cylindrical first workpiece 30 shown in Fig. 3B for forming the bearing part 22 is formed. The first workpiece 30 is inserted by casting in a second workpiece 32 for forming the cap body 21 as shown in Fig. 6A to form a primary workpiece 34 having a semifinished workpiece 33. The primary workpiece 34 is divided into halves along a diametrical division line to obtain two secondary workpieces 35. The bearing cap 20 is formed by processing one of the two secondary workpieces 35.

A procedure for forming the first workpiece 30 for forming the bearing part 22 will be described with reference to Figs. 3A and 3B. The short, cylindrical first workpiece 30 is formed by cutting a cylindrical workpiece 31 formed by hot extrusion. More specifically, as shown in Fig. 3A, an extruder 40 has a first die 41 provided with a mandrel 41a, and a second die 42 arranged in an extruding direction A1 so as to define an annular die hole 43. A solid, cylindrical billet 44 of the second material is extruded through the annular die hole 43 to obtain the cylindrical workpiece 31. The outside and the inside diameter of the annular die hole 43 are equal to those of imaginary cylinders defining the outer surface 22a of the bearing part 22 and the bearing surface 23, respectively. Therefore, the width of the die hole 43 is equal to the thickness t2 of the bearing part 22.

The billet 44 loaded into a container 45 included in the extruder 40 is pressed through a dummy block 46 by a ram in the extruding direction A1, and is extruded through the die hole 43 at a predetermined extrusion rate to form the cylindrical workpiece 31. The inside and the outside diameter of the cylindrical workpiece 31 are equal to those of imaginary cylinders defining the corresponding surfaces of the bearing part 22. Then, as shown in Fig. 3B, the cylindrical workpiece 31 is cut into short, cylindrical first workpiece 30 having a length equal to the length t1 of the bearing part 22 with a cutter. The first workpiece 30 has an inside surface 30a of a diameter equal to the diameter of an imaginary cylinder including the bearing surface 23 (inner surface 22a), and an outside surface 30b equal to the diameter of an imaginary cylinder defining the outer surface 22b. The first workpiece 30 has a thickness equal to the thickness t2 of the bearing part 22.

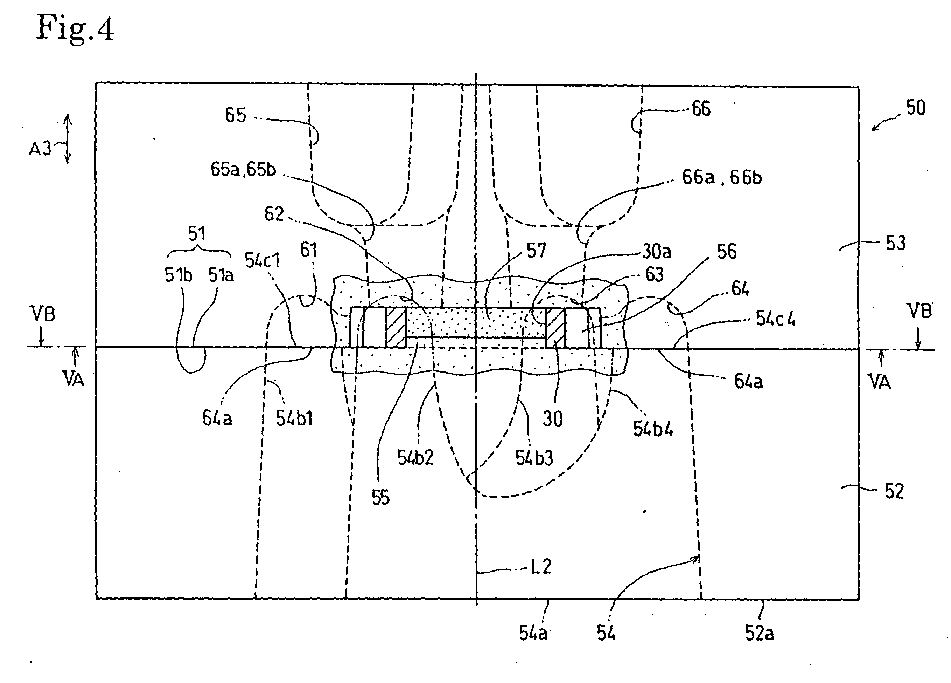

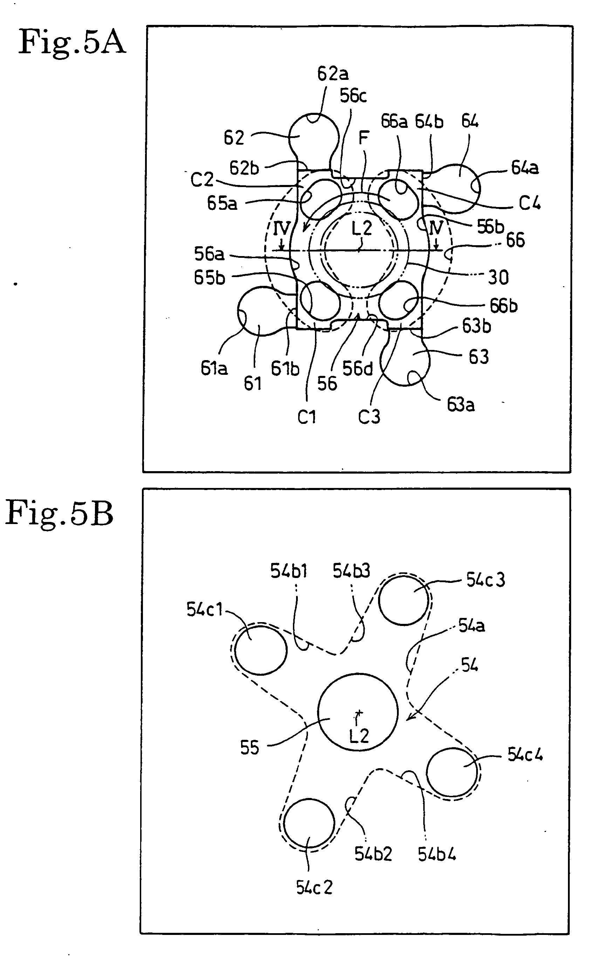

A casting procedure for casting the primary workpiece 34 will be described with reference to Figs. 4 to 6. Referring to Figs. 4, 5A and 5B, the secondary workpiece 32 (Fig. 6A) for forming the cap body 21a is formed by low-pressure die casting using a sand mold 50 formed of foundry sand. The sand mold 50 having the shape of a rectangular solid has a lower mold half, i.e., a drag 52 and an upper mold half, i.e., a cope 53 separated by a parting surface 51.

The drag 52 is provided with a sprue 54, thorough which the molten first material is poured into the sand mold 50, having an inlet 54a (Fig. 5B) opening in the lower surface 52a, and a cylindrical projection 55 for positioning the first workpiece 30 in a central part of the parting surface 52a of the lower mold 52. The sprue 54 has four runners 54b1 to 54b4 having outlets 54c1 to 54c4 opening in the parting surface 51a. The projection 55 has a height smaller than the length t1 of the first workpiece 30. The first workpiece 30 is disposed on the drag 52 with the projection 55 fitted from below in a space defined by the inside surface 30a of the first workpiece 30.

The cope 53 has a cavity 56 for receiving the first workpiece 30 fitted on the projection 55 and for casting the second workpiece 32 (Fig. 6A) for forming the cap body 21 (Fig. 2), four gates 61 to 64 having outlets 61b to 64b opening into the cavity 56, and inlets 61a to 64a aligned with the outlets 54c1 to 54c4 of the runners 54b1 to 54b4, a pair of risers 65 and 66 respectively having a pair of inlets 65a and 65b, and a pair of inlets 66a and 66b opening into the cavity 56.

The cavity 56, as viewed along the center axis L2 of the first workpiece 30 placed in the sand mold 50, has a substantially square shape. Thus, the second workpiece 32 or the semifinished workpiece 33 molded in the cavity 56, as viewed along the center axis A3 has the same square shape. The four gates 61 to 64 are arranged so as to correspond to the four corners C1 to C4, respectively, of the square second workpiece 32 or the semifinished workpiece 33 to make the main current of the molten metal flows in a swirling current F (Fig. 5A) that flows in the cavity 56 in a fixed direction around the first workpiece 30.

Referring to Fig. 5A, the four gates 61 to 64 are arranged substantially in point symmetry with respect to the center axis L2 as viewed along the center axis A3 (Fig. 4). The four gates 61 to 64 extend perpendicularly to side walls 56a to 56d defining the square cavity 56 and the four corners C1 to C4. That is, as viewed along the center axis A3, the four gates 61 to 64 are arranged substantially in point symmetry with respect to the center axis L2 relative to the second workpiece or the semifinished workpiece 33. The gates 61 to 64 extend perpendicularly to the side surfaces 32a to 32d of the second workpiece 32 or the side surfaces 33a to 33d of the semifinished workpiece 33 at the corners C1 to C4, respectively.

Referring to Fig. 4, the first workpiece 30 is fitted on the projection 55 to position the first workpiece 30 on the drag 52 to insert the first workpiece 30 in the second workpiece 32 by casting. Then, a sand core 57 that fills up a space defined by the first workpiece 30 is put on the projection 55, the cope 53 is mounted on the drag 52 so that the first workpiece 30 is contained in the cavity 56, and then the drag 52 and the cope 53 are fastened together to close the sand mold 50.

Then, the molten metal of a high temperature in the range of, for example, about 680°C to 730°C is poured through the sprue 54 into the sand mold 50 by pressure. Then, the molten metal flows through the runners 54b1 to 54b4 and the gates 61 to 64 into the cavity 56. The molten metal flows in the swirling current F around the first workpiece 30 in the cavity 56 and flows through the inlets 65a, 65b, 66a and 66b into the risers 65 and 66.

During this casting process, the first workpiece 30 is heated by the molten metal and the outside surface 30b of the first workpiece 30 on the boundary between the molten metal and the first workpiece 30, i.e., the boundary between the outside surface 30b of the first workpiece 30 and the inside surface 32e of the second workpiece 32, is partly melted. Consequently, the first and the second material melt into each other. When the first and the second material thus melted into each other are solidified, the outside surface 30b of the first workpiece 30 and the inside surface 32e of the second workpiece 32 at the boundary are bonded together metallurgically. Then, the sand mold 50 is broken to take out a casting. Thus, the casting process is completed.

A trimming process removes unnecessary parts of the first material solidified in the sprue 54, the gates 61 to 64 and the risers 65 and 66 from the casting, to provide the primary workpiece 34 having one semifinished workpiece 33 consisting of the one first workpiece 30 and the one second workpiece 32 as shown in Fig. 6A. Thus, the casting procedure including the casting process is completed.

A dividing process for dividing the primary workpiece 34 into secondary workpieces 35 for forming bearing caps 20 will be described with reference to Figs. 6A and 6B. The primary workpiece 34, i.e., the semifinished workpiece 33 is cut into halves along a center plane P2 including the center axis L2 to obtain the two secondary workpieces 35 with a cutter. In this embodiment, the center plane P2 coincides with the plane P1 of symmetry (Fig. 1) with respect to which the semifinished workpiece 33 is symmetrical. As shown in Fig. 6B, the dividing process divides the primary workpiece 34 into two secondary workpieces 35 each having a secondary cap workpiece 36 and a secondary bearing part workpiece 37.

The secondary workpiece 35 is subjected to a finishing process to obtain a bearing cap 20 shown in Fig. 2. The finishing process includes machining processes, such as boring for forming through holes 25a and 25b (Fig. 1), and grinding.

The effect of the bearing member manufacturing method in the first embodiment will be described.

The second workpiece 32 formed of the first material, and the first workpiece 30 formed of the second material and having the bearing surface 23, i.e., the circular inside surface 30a, for supporting the journal of the crankshaft 3 are combined integrally by casting to form the primary workpiece 34 having at least one semifinished workpiece 33 consisting of the one first workpiece 30 and the one second workpiece 32. The semifinished workpiece 33 is divided into halves along the center plate P2 to obtain the two secondary workpieces 35 for forming the bearing caps 20. The two secondary workpiece 35 for forming the bearing caps 20 are formed by casting the semifinished workpiece 33 in the single mold, and hence a mold does not need to be formed for each bearing cap 20. The number of molds necessary for forming the bearing caps 20 can be reduced, yield can be improved, and the lightweight bearing cap 20 consisting of parts respectively formed of two types of light-metal-base materials can be manufactured at a low cost. Since the two secondary workpieces 35 are formed by dividing the one semifinished workpiece 33 formed by integrally combining the one second workpiece 32 formed of the first material, i.e., a light-metal-base material, and the one first workpiece 30 formed of the second material, i.e., a light-metal-base material, into halves, the range of distribution of the qualities of the secondary workpiece 35 and hence that of distribution of the qualities of the bearing caps 20 can be narrowed, and thereby the functions of the bearing caps 20 to support the crankshaft 3 can be stabilized.

The second material forming the bearing part 22 having the bearing surface 23 of the bearing cap 20 consisting of the cap boy 21 and the bearing part 22 has a coefficient of linear expansion closer to that of the material forming the crankshaft 3 than that of the first material forming the cap body 21. Therefore, the gap that is formed while the internal combustion engine E is in operation between the crankshaft 3 and the bearing part 22 due to the difference in thermal expansion between the crankshaft 3 and the bearing part 22 is small and hence noise and vibration that are generated by the rotating crankshaft 3 can be reduced. Since the qualities of the plurality of bearing caps 20 of the bearing mechanism distribute in a narrow range, the bearing mechanism has an improved effect on reducing vibration and noise.

Since the semifinished workpiece 33 formed by bonding together the first workpiece 30 and the second workpiece 32 by the casting process that places the first workpiece 30 in the mold, and pours the molten metal of the first material into the mold, the boundary surface parts of the first workpiece 30 and the second workpiece 32 are metallurgically bonded together. Thus, the first workpiece 30 and the second workpiece 32 are firmly bonded together, the range of variation of the quality of the semifinished workpiece 33 attributable to the insertion of the first workpiece 30 in the second workpiece 32 can be narrowed, and thereby the functions of the bearing caps 20 to support the crankshaft 3 can be stabilized. The formation of the cylindrical workpiece 31 for forming the first workpiece 30 by extrusion contributes to the cost reduction of the bearing cap 20.

The molten metal poured into the cavity 56 through the gates 61 to 64 corresponding to the four corners C1 to C4 of the semifinished workpiece 33 having the substantially square shape as viewed along the center axis L2 flows uniformly in around the first workpiece 30 in the cavity 56. Consequently, the semifinished workpiece 33 and the secondary workpieces 35 can be formed in an improved quality, which is effective in stabilizing the function of the bearing cap 20 to support the crankshaft 3.

Since the molten metal flows through the gates 61 to 64 into the cavity 56 flows in the cavity 56 in the swirling current F around the first workpiece 30, the outside surface of the first workpiece 30 and the inside surface of the second workpiece 32 can be uniformly metallurgically bonded. Thus, the first workpiece 30 and the second workpiece 32 are bonded by high bond strength, which is effective in stabilizing the function of the bearing member to support the crankshaft 3. The arrangement of the four gates 61 to 64 substantially in point symmetry with respect to the center axis L2 passing the center of the cavity 56 is effective in generating the swirling current F.

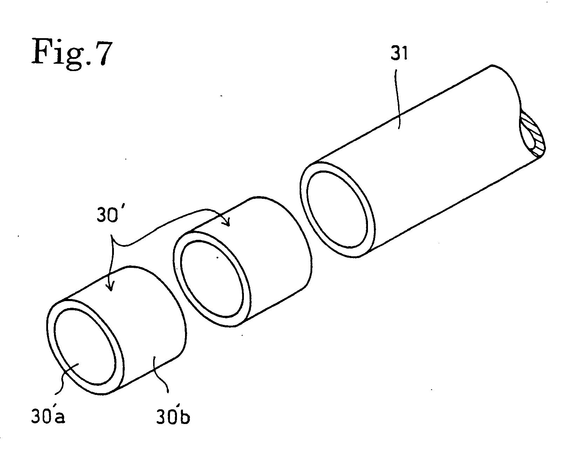

A bearing member manufacturing method in a second embodiment of the present invention will be described with reference to Figs. 7 to 9B and, when necessary, Figs. 1 to 6 used for describing the first embodiment. The second embodiment is basically the same as the first embodiment and differs from the first embodiment only in that the second embodiment forms a primary workpiece including a predetermined number of semifinished workpieces. Description of matters the same as those of the first embodiment will be simplified or omitted and only matters different from those of the first embodiment will be described. Parts formed by the second embodiment that are the same as or correspond to those formed by the first embodiment are denoted by the same reference characters.

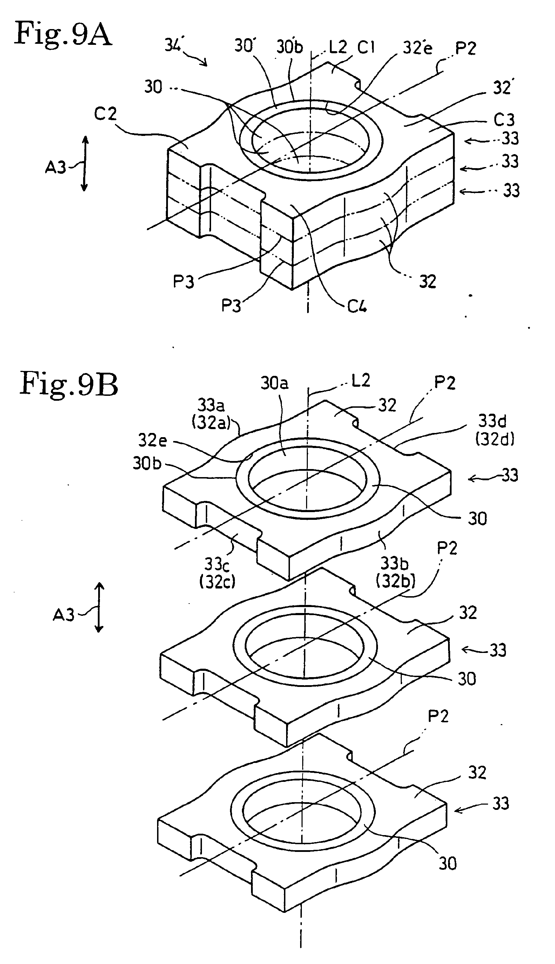

The bearing member manufacturing method manufactures the bearing cap 20 shown in Fig. 2. Referring to Fig. 7, a first workpiece 30' is produced by the same process as that employed in the first embodiment. Then, a primary workpiece 34' shown in Fig. 9A for forming a plurality of semifinished workpieces 33 is formed by inserting the first workpiece 30' in a second workpiece 32' by casting. Then, the primary workpiece 34' is cut along planes perpendicular to the center axis A3 of the second workpiece 30' of the primary workpiece 34' as shown in Fig. 9B into three semifinished workpieces 33. Then, each of the semifinished workpieces 33 are cut into halves as shown in Fig. 6B to obtain two secondary workpieces 35. Each secondary workpiece 35 is finished to form one bearing cap 20.

A first workpiece forming process for forming the first workpiece 30' will be explained. The cylindrical workpiece 31 formed by extrusion using the extruder 40 shown in Fig. 3A is cut with a cutter into the first workpieces 30' having a length equal to the sum of the lengths t1 of the predetermined number of bearing parts 22, i.e., three bearing parts 22 in this embodiment, and cutting allowances. Each of the first workpieces 30' has an inside surface 30'a of a diameter equal to that of an imaginary cylinder defining the bearing surface 23, namely, the inside surface 22a, of the bearing part 22, an outside surface 30'b of a diameter equal to that of an imaginary cylinder defining the outside surface 22b of the bearing part 22, and a thickness equal to the thickness t2 of the bearing part 22.

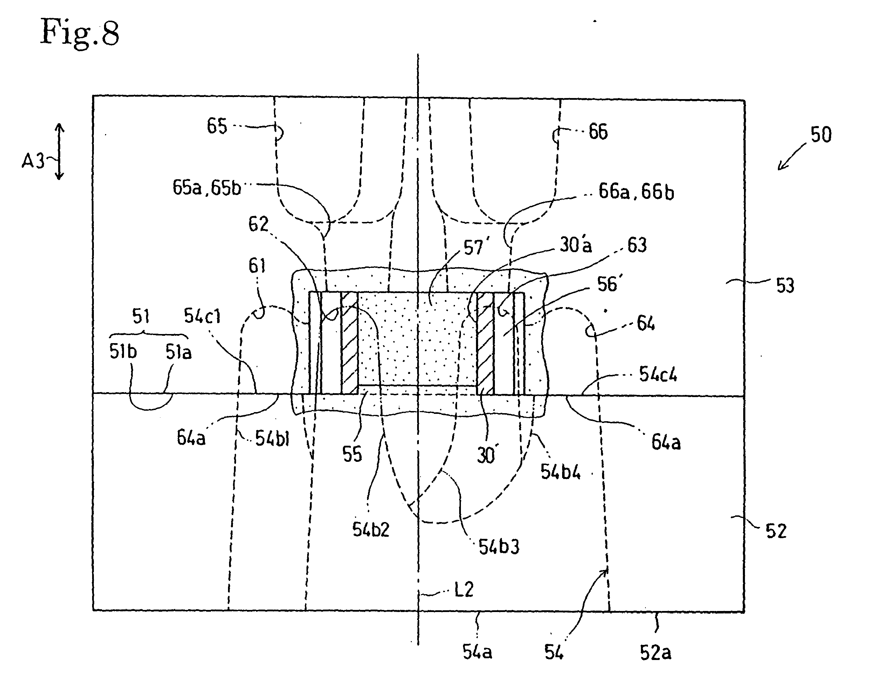

A casting procedure for casting the primary workpiece 34' will be described with reference to Figs. 8, 9A and 9B. Referring to Fig. 8, the secondary workpiece 32' is formed by low-pressure die casting using a sand mold 50 similar to that employed in the first embodiment. The sand mold 50 having the shape of a rectangular solid has a drag 52 and a cope 53 separated by a parting surface 51.

The first workpiece 30' having an inner circumference 30'a is fitted on a projection 55 formed in the drag 52. The cope 53 is provided with a cavity 56' for forming the second workpiece 32 (Fig. 6A). The first workpiece 30' is received in the cavity 56'.

The cavity 56' is similar to the cavity 56 shown in Fig. 4, except that the cavity 56' has a depth greater than that of the cavity 56. The cavity 56' has a substantially square shape as viewed in an axial direction A3 parallel to the center axis L2. The cope 51 is provided with four gates 61 to 64 arranged so as to correspond to the four corners C1 to C4, respectively, of the square second workpiece 32 or the semifinished workpiece 33 to make the main current of the molten metal flows in a swirling current F as shown in Fig. 5A that flows in the cavity 56 in a fixed direction around the first workpiece 30'.

Referring to Fig. 8, the first workpiece 30' is fitted on the projection 55 to position the first workpiece 30' on the drag 52 to insert the first workpiece 30' in the second workpiece 32 by casting. Then, a sand core 57' that fills up a space defined by the first workpiece 30' is put on the projection 55, the cope 53 is mounted on the drag 52 so that the first workpiece 30' is contained in the cavity 56', and then the drag 52 and the cope 53 are fastened together to close the sand mold 50.

Then, the high-temperature molten metal is poured through the sprue 54 into the sand mold 50 by pressure. Then, the molten metal flows through the runners 54b1 to 54b4 and the gates 61 to 64 into the cavity 56. The molten metal flows in the swirling current F around the first workpiece 30' in the cavity 56 and flows through the inlets 65a, 65b, 66a and 66b into the risers 65 and 66.

During this casting process, the first workpiece 30' is heated by the molten metal and the outside surface 30'b of the first workpiece 30' on the boundary between the molten metal and the first workpiece 30', i.e., the boundary between the outside surface 30'b of the first workpiece 30' and the inside surface 32'e (Fig. 9A) of the second workpiece 32' , is partly melted. Consequently, the first and the second material melt into each other. When the first and the second material thus melted into each other are solidified, the outside surface 30'b of the first workpiece 30' and the inside surface 32'e of the second workpiece 32' at the boundary are bonded together metallurgically. Then, the sand mold 50 is broken to take out a casting. Thus, the casting process is completed.

A trimming process removes unnecessary parts of the first material solidified in the sprue 54, the gates 61 to 64 and the risers 65 and 66 from the casting, to provide the primary workpiece 34' integrally including three semifinished workpieces 33 each consisting of the one first workpiece 30 and the one second workpiece 32 as shown in Fig. 9A. Thus, a casting procedure including the casting process is completed.

The primary workpiece 34' is a continuous arrangement of the semifinished workpieces 33 each consisting of the first workpiece 30 and the second workpiece 32, and arranged successively in the axial direction A3 parallel to the center axis L2. The axial direction A3 is one of directions parallel to the center plane P2.

A dividing process for dividing the primary workpiece 34' into secondary workpieces 35 (Fig. 6B) for forming bearing caps 20 will be described with reference to Figs. 9A and 9B. The dividing process included in the second embodiment is either of the following first and second dividing processes.

The first dividing process includes a slicing step that slices the primary workpiece 34' along planes P3 perpendicular to the center axis L2 into three semifinished workpieces 33 as shown in Fig. 9B, and a cutting step that cuts each semifinished workpiece 33 with a cutter along the center plane P2 including the center axis L2 to halve each semifinished workpiece 33 into two secondary workpiece 35 each having a secondary cap workpiece 36 and a secondary bearing part workpiece 37 as shown in Fig. 6B.

The second dividing process includes a cutting step that cuts the primary workpiece 34' along the center plane P2 with a cutter into two half primary workpieces each including three secondary workpieces 35 arranged along the center axis L2, and a slicing step that slices the half primary workpiece along planes P3 perpendicular to the center axis L2 into three secondary workpieces 35.

The second embodiment, similarly to the first embodiment, subjects the secondary workpiece 35 to a finishing process to obtain a bearing cap 20 shown in Fig. 2. The finishing process includes machining processes.

The second embodiment has the following effect in addition to the effect of the first embodiment. The six secondary workpieces 35, the number of the secondary workpieces 35 being twice the predetermined number, are formed by dividing the primary workpiece 34', which is a continuous arrangement of the semifinished workpieces 33 each consisting of the first workpiece 30 and the second workpiece 32, and arranged successively in the axial direction A3 parallel to the center axis L2, by the combination of the slicing step that slices the primary workpiece 34' along planes P3 perpendicular to the center axis L2 and the cutting step that cuts each semifinished workpiece 33 along the center plane P2 including the center axis L2. Therefore, the second embodiment needs fewer sand molds 50 than the first embodiment for manufacturing the same number of bearing caps, and is capable of further improving yield. Thus, the second embodiment is more effective in reducing the cost of the bearing cap 20 than the first embodiment. Since twice the predetermined number of secondary workpieces 35 can be obtained by cutting the single primary workpiece 34' integrally including the predetermined number of semifinished workpieces 33, the quality range in which the qualities of the secondary workpieces are distributed can be further narrowed, and thereby effects on the stabilization of the function to support the crankshaft 3 can be further promoted.

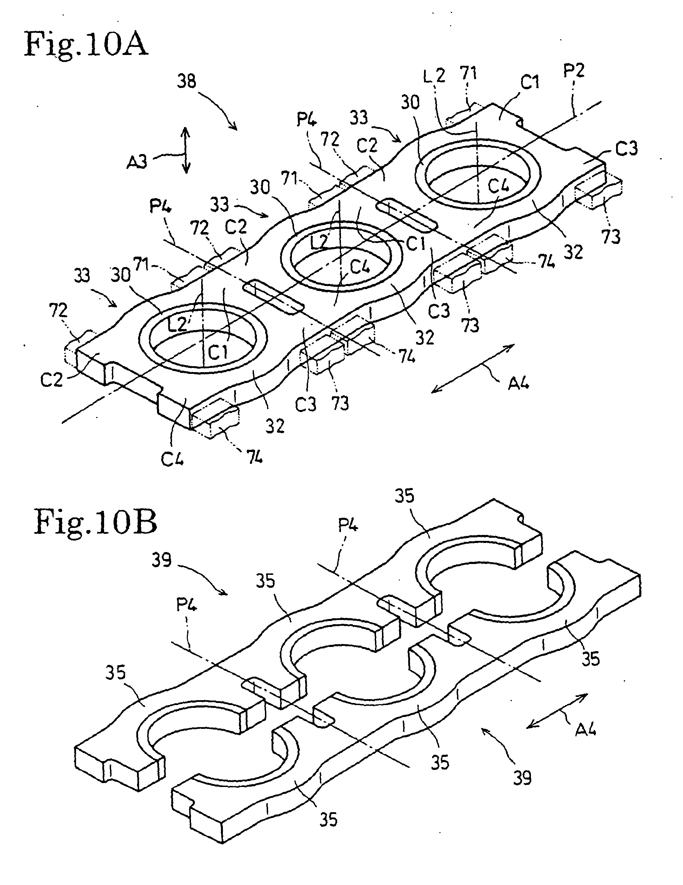

A bearing member manufacturing method in a third embodiment according to the present invention will be described with reference to Figs. 10A and 10B. The third embodiment, similarly to the second embodiment, differs from the first embodiment in casting one primary workpiece including a plurality of semifinished workpieces in one mold. The third embodiment is the same in other respects as the first embodiment. Therefore, description of matters the same as those of the first embodiment will be simplified or omitted and only matters different from those of the first embodiment will be described. Parts formed by the third embodiment that are the same as or correspond to those formed by the first embodiment are denoted by the same reference characters.

Referring to Fig. 10A, a primary workpiece 38 includes a plurality of semifinished workpieces 33 (three semifinished workpieces 33) successively arranged in a direction A4 perpendicular to the center axes L2 of the semifinished workpieces 33. The primary workpiece 38 is cast in a sand mold, not shown, by low-pressure die casting. The direction A4 is one of directions parallel to the center plane P2 dividing each of the semifinished workpiece 33 into two secondary workpieces 35.

The sand mold has a drag provided with three projections, which corresponding to the projection 55, for positioning three first workpieces 30, and a cope provided with three cavities, which correspond to the cavity 56, for receiving the first workpieces 30. As indicated by imaginary lines in Fig. 10A, gates 71 to 74 are formed so as to correspond to the four corners C1 to C4 of each semifinished workpiece 33 which is substantially square as viewed in a direction A3 parallel to the center axis L2 of the semifinished workpiece 33. The gates 71 to 74 are arranged symmetrically with respect to the center plane P2 so as to open in side surfaces of the cavity for forming the lower surfaces 27 (Fig. 1) of bearing caps 20.

A dividing process for dividing the primary workpiece 38 into secondary workpieces 35 included in the third embodiment is either of the following first and second dividing processes.

The first dividing process includes a halving step and a dividing step. The halving step halves the primary workpiece 38 including the three semifinished workpieces 33 along the center plane P2, which includes the center planes P2 of the semifinished workpieces 33, with a cutter into two half primary workpieces 39 as shown in Fig. 10B. Each of the half primary workpieces 39 includes the three secondary workpieces 35 successively arranged in the direction A4 parallel to the center plane P2. The dividing step divides each half primary workpiece 39 into the three secondary workpieces 35 along planes P4 perpendicular to the direction A4.

The second dividing process includes a cutting step and a dividing step. The cutting step cuts the primary workpiece 39 along the planes P4 (Fig. 10A) perpendicular to the direction A4 into the three semifinished workpieces 33 similar to the semifinished workpiece 33 shown in Fig. 6A. The dividing step cuts the semifinished workpiece 33 along the center plane P2 into two secondary workpieces 35.

The third embodiment includes, in combination, the halving step that halves the primary workpiece 38 including the three semifinished workpieces 33 arranged in the direction A4 parallel to the center plane P2 along the center plane P2 and the dividing step that divides the primary workpiece 38 along the planes P4 perpendicular to the direction A4. Thus, twice the predetermined number of secondary workpieces 35 can be obtained by cutting the single primary workpiece 38. The effect of the third embodiment is similar to that of the second embodiment.

Modifications of the foregoing embodiments will be described.

The second material, i.e., the light-metal-base material forming the bearing part 22, may be an aluminum-base material containing an aluminum alloy as the matrix, and a dispersed material, such as particles or fibers of an oxide ceramic material, such as silica or alumina, or a carbide ceramic material, dispersed in the matrix. The second material may be a light metal other than aluminum, such as a magnesium-base alloy, or a composite light-metal-base material containing the light metal as the matrix.

The outside surface 22b of the bearing part 22 may be a surface of any suitable shape other than the cylindrical surface. The bearing member mentioned in the description of the preferred embodiments is the bearing cap. When the present invention is applied to an engine body having a cylinder block and a lower block joined to the lower end of the cylinder block, and supporting a crankshaft for rotation between the cylinder block and the lower block, the bearing member is the lower block.

The internal combustion engine may be a multiple-cylinder internal combustion engine other than a V-type internal combustion engine or a single-cylinder internal combustion engine. Although the internal combustion engine mentioned in the description of the preferred embodiments is assumed to be an automotive internal combustion engine, the internal combustion engine may be a marine engine, such as an outboard engine having a vertical crankshaft.

The rotational shaft may be any rotational shaft other than the crankshaft of an internal combustion engine or may be a crankshaft or rotational shaft of an apparatus other than the internal combustion engine.

A bearing member manufacturing method manufactures a bearing member 20 formed of a light-metal-base material and capable of stably supporting a rotational shaft at a reduced manufacturing cost. The bearing member manufacturing method manufactures a bearing member 20 including a bearing body 21 formed of a first material, a light-metal-base material, and a bearing part 22 formed of a light-metal-base material different from that forming the body part 21, the bearing part 22 having a bearing surface 23 and bonded to the body part 21. A first workpiece 30 having a cylindrical inside surface 30a serving as the bearing surface 23 is placed in a mold 50. The molten first material is poured into a cavity 56 surrounding the first workpiece 30 to cast a second workpiece 32. The first workpiece 30 and the second workpiece 32 are bonded metallurgically along the interface between the first workpiece 30 and the second workpiece 32 to form a primary workpiece 34 in the form of a semifinished workpiece 33. The semifinished workpiece 33 is divided into haves along a center plane P2 including the center axis L2 of the inside surface 30a. Thus, two secondary workpieces 35 to be finished in the two bearing members 20 are obtained by cutting the single semifinished workpiece 33.

## Claims

1. A bearing member manufacturing method of manufacturing a bearing member (20) having a body part (21) formed of a first material of a light alloy, and a bearing part (22) formed of a second material of a light-alloy-base material different from that forming the body part (21), said bearing part having a bearing surface of a semicircular cross section and integrally combined with the body part (21), **characterized by** comprising:
a casting step of forming a primary workpiece (34, 34') having at least one semifinished workpiece (33) including one first workpiece (30, 30') having a cylindrical inside surface (30a) serving as the bearing surface, and one second workpiece (32, 32') by integrally combining the first workpiece (30, 30') and the second workpiece (32, 32') in a mold (50) by casting; and
a dividing step of dividing the primary workpiece (34, 34') removed from the mold (50) into halves along a center plane (P2) including a center axis (L2) of the inside surface (30) to obtain two secondary workpieces (35) for forming two bearing members.

2. The bearing member manufacturing method according to claim 1 further comprising a first workpiece forming step for forming the cylindrical first workpiece (30, 30') of the second material,
wherein the casting step includes a casting step of placing at least one of the first workpiece (30, 30') formed by the first workpiece forming step in the mold (50), pouring the molten first material into the mold and metallurgically bonding together the first workpiece (30, 30') and the second workpiece (32, 32') along the interface between the first workpiece (30, 30') and the second workpiece (32, 32').

3. The bearing member manufacturing method according to claim 2, further comprising a step of providing a cavity (56) for forming the second workpiece (32, 32') around the first workpiece (30, 30') in the mold (50) and a step of pouring the molten first material into the cavity (56) through parts of the mold (50) corresponding to four corners (C1 to C4) of the semifinished workpiece (33) having a substantially square shape as viewed along the center axis (L2).

4. The bearing member manufacturing method according to claim 3, wherein the molten first metal is poured into the cavity (56) so as to flow in a swirling current (F) in the cavity (56).

5. The bearing member manufacturing method according to claim 1, wherein an aluminum alloy is used as the first material, and an aluminum alloy having a high silicon content is used as the second material.

6. The bearing member manufacturing method according to any one of claims 1 to 5 further comprising:
a casting step of forming a primary workpiece (34') including a predetermined number of semifinished workpieces (33) axially arranged such that at least second workpieces (32') included in the semifinished workpieces (33) are continuously arranged in a direction (A3) parallel to the center plane (P2), and
a dividing step of dividing the primary workpiece (34') along a plane (P3) perpendicular to the direction (A3) perpendicular to the center plane (P2) of the primary workpiece (34') into the predetermined number of semifinished workpieces (33).

7. The bearing member manufacturing method according to any one of claims 1 to 5 further comprising:
a casting step of forming the primary workpiece (34) including a predetermined number of semifinished workpieces (33) arranged in a direction (A4) perpendicular to the center axis (L2) included in the center plane (P2) such that the second workpieces (32) are continuously arranged in a direction (A4) perpendicular to the center axis (L2) in the center plane (P2), and
a dividing step of dividing the primary workpiece (34) along a plane (P4) perpendicular to the direction (A4) perpendicular to the center axis (L2) in the center plane (P2) into the predetermined number of semifinished workpieces (33).

## Patentansprüche

1. Lagerelement-Herstellungsverfahren zur Herstellung eines Lagerelements (20), das einen Körperteil (21), der aus einem ersten Material einer leichten Legierung gebildet ist, und einen Lagerteil (22) umfasst, der aus einem zweiten Material eines Leichtlegierungsbasis-Materials gebildet ist, das verschieden ist von demjenigen, das den Körperteil (21) bildet, wobei der Lagerteil eine Lageroberfläche mit einem halbkreisförmigen Querschnitt aufweist und mit dem Körperteil (21) integral kombiniert ist, **dadurch gekennzeichnet, dass** das Verfahren umfasst:
einen Gießschritt des Ausbildens eines primären Werkstücks (34, 34') mit wenigstens einem halbfertigen Werkstück (33), das ein erstes Werkstück (30, 30') mit einer als Lagerfläche dienenden zylindrischen Innenoberfläche (30a) und ein zweites Werkstück (32, 32') enthält, durch integrales Kombinieren des ersten Werkstücks (30, 30') und des zweiten Werkstücks (32, 32') in einer Form (50) mittels Gießen; und
einen Trennungsschritt des Trennens des primären Werkstücks (34, 34'), das aus der Form 50 entnommen worden ist, in Hälften längs einer Mittelebene (P2), die eine Zentralachse (L2) der Innenoberfläche (30) enthält, um zwei sekundäre Werkstücke (35) für die Bildung zweier Lagerelemente zu erhalten.

2. Lagerelement-Herstellungsverfahren nach Anspruch 1, das ferner einen ersten Werkstückbildungsschritt zum Bilden des zylindrischen ersten Werkstücks (30, 30') aus dem zweiten Material umfasst,
wobei der Gießschritt einen Gießschritt des Platzierens wenigstens eines der ersten Werkstücke (30, 30'), die durch den ersten Werkstückbildungsschritt gebildet worden sind, in der Form (50), des Eingießens des geschmolzenen ersten Materials in die Form und des metallurgischen Verbindens des ersten Werkstücks (30, 30') und des zweiten Werkstücks (32, 32') längs der Grenzfläche zwischen dem ersten Werkstück (30, 30') und dem zweiten Werkstück (32, 32') enthält.

3. Lagerelement-Herstellungsverfahren nach Anspruch 2, das ferner einen Schritt des Bereitstellens eines Hohlraums (56) zum Ausbilden des zweiten Werkstücks (32, 32') um das erste Werkstück (30, 30') in der Form (50) und einen Schritt des Eingießens des geschmolzenen ersten Materials in den Hohlraum (56) durch Teile der Form (50) umfasst, die den vier Ecken (C1 bis C4) des halbfertigen Werkstücks (33) mit einer in Richtung der Zentralachse (L2) betrachtet im Wesentlichen quadratischen Form entsprechen.

4. Lagerelement-Herstellungsverfahren nach Anspruch 3, wobei das geschmolzene erste Metall so in den Hohlraum (56) gegossen wird, dass es im Hohlraum (56) in einer verwirbelten Strömung (F) fließt.

5. Lagerelement-Herstellungsverfahren nach Anspruch 1, wobei eine Aluminiumlegierung als erstes Material verwendet wird und eine Aluminiumlegierung mit einem hohen Siliziumgehalt als zweites Material verwendet wird.

6. Lagerelement-Herstellungsverfahren nach irgendeinem der Ansprüche 1 bis 5, ferner umfassend:
einen Gießschritt des Formens eines primären Werkstücks (34'), das eine vorgegebene Anzahl von halbfertigen Werkstücken (33) enthält, die axial so angeordnet sind, dass wenigstens zweite Werkstücke (32'), die in den halbfertigen Werkstücken (33) enthalten sind, in einer Richtung (A3) parallel zur Zentralebene (P2) kontinuierlich angeordnet sind; und
einen Trennungsschritt des Trennens des primären Werkstücks (34') längs einer Ebene (P3) senkrecht zur Richtung (A3) senkrecht zur Zentralebene (P2) des primären Werkstücks (34') in die vorgegebene Anzahl halbfertiger Werkstücke (33).

7. Lagerelement-Herstellungsverfahren nach irgendeinem der Ansprüche 1 bis 5, ferner.umfassend:
einen Gießschritt des Bildens des primären Werkstücks (34), das eine vorgegebene Anzahl halbfertiger Werkstücke (33) enthält, die in einer Richtung (A4) senkrecht zur Zentralachse (L2), die in der Ebene (P2) enthalten ist, angeordnet sind, so dass die zweiten Werkstücke (32) in einer Richtung (A4) senkrecht zur Zentralachse (L2) in der Zentralebene (P2) kontinuierlich angeordnet sind; und
einen Trennungsschritt des Trennens des primären Werkstücks (34) längs einer Ebene (P4) senkrecht zur Richtung (A4) senkrecht zur Zentralachse (L2) in der Zentralebene (P2) in die vorgegebene Anzahl halbfertiger Werkstücke (33).

## Revendications

1. Un procédé de fabrication d'un élément de palier pour fabriquer un élément de palier (20) comprenant une partie de corps (21) formée d'un premier matériau en alliage léger, et une partie de palier (22) formée d'un deuxième matériau en un matériau à base d'alliage léger différent de celui formant la partie corps (21), ladite partie de palier ayant une surface de palier à section transversale semi-circulaire et étant combinée solidairement à la partie de corps (21), **caractérisé par** le fait de comprendre :
une étape de moulage, de formage d'une pièce d'oeuvre principale (34, 34') ayant au moins une pièce d'oeuvre (33) semi-finie, incluant une première pièce d'oeuvre (30, 30') ayant une surface intérieure (30a) cylindrique servant de surface de palier, et une deuxième pièce d'oeuvre (32, 32'), par combinaison solidaire de la première pièce d'oeuvre (30, 30') et de la deuxième pièce d'oeuvre (32, 32') dans un moule (50) par moulage sous pression ; et
une étape de division, de division de la pièce d'oeuvre principale (34, 34') enlevée du moule (50) en moitiés le long d'un plan central (P2) incluant un axe central (L2) de la surface intérieure (30), pour obtenir deux pièces d'oeuvre secondaires (35) pour former deux éléments de palier.

2. Le procédé de fabrication d'un élément de palier selon la revendication 1, comprenant en outre une première étape de formation de pièce d'oeuvre, pour former la première pièce d'oeuvre (30, 30') cylindrique du deuxième matériau,
dans lequel l'étape de moulage sous pression comprend une étape de moulage sous pression, consistant à placer au moins l'une de la première pièce d'oeuvre (30, 30') formée par l'étape de formation de première pièce d'oeuvre dans le moule (50), de versement du premier matériau fondu dans le moule et de liaison métallurgique ensemble de la première pièce d'oeuvre (30, 30') et de la deuxième pièce d'oeuvre (32, 32') le long de l'interface entre la première pièce d'oeuvre (30, 30') et la deuxième pièce d'oeuvre (32, 32').

3. Le procédé de fabrication d'un élément de palier selon la revendication 2, comprenant en outre une étape de fourniture d'une cavité (56) pour former la deuxième pièce d'oeuvre (32, 32') autour de la première pièce d'oeuvre (30, 30') dans le moule (50), et une étape de versement du premier matériau fondu dans la cavité (56), par des parties du moule (50) correspondant à quatre angles (C1 à C4) de la pièce d'oeuvre (33) semi-finie ayant une forme sensiblement carrée, tel qu'observé le long de l'axe central (L2).

4. Le procédé de fabrication d'un élément de palier selon la revendication 3, dans lequel le premier métal fondu est versé dans la cavité (56) pour s'écouler en un courant (F) à composante rotative dans la cavité (56).

5. Le procédé de fabrication d'un élément de palier selon la revendication 1, dans lequel un alliage d'aluminium est utilisé comme premier matériau et un alliage d'aluminium ayant une haute teneur en silicium est utilisé comme deuxième matériau.

6. Le procédé de fabrication d'un élément de palier selon l'une quelconque des revendications 1 à 5, comprenant en outre :
une étape de moulage sous pression pour former une première pièce d'oeuvre (34') incluant un nombre prédéterminé de pièces d'oeuvre (33) semi-finies, agencées axialement de manière qu'au moins des deuxièmes pièces d'oeuvre (32') incluses dans les pièces d'oeuvre (33) semi-finies soient agencées de façon continue dans une direction (A3) parallèle au plan central (P2), et
une étape de division, consistant à diviser la première pièce d'oeuvre (34'), le long d'un plan (P3) perpendiculaire à la direction (A3) perpendiculaire au plan central (P2) de la pièce d'oeuvre principale (34'), en le nombre prédéterminé de pièces d'oeuvre (33) semi-finies.

7. Le procédé de fabrication d'un élément de palier selon l'une quelconque des revendications 1 à 5, comprenant en outre :
une étape de moulage, pour former la première pièce d'oeuvre (34), incluant un nombre prédéterminé de pièces d'oeuvre (33) semi-finies, agencées en une direction (A4) perpendiculairement à l'axe central (L2) inclus dans le plan central (P2), de manière que les deuxièmes pièces d'oeuvre (32) soient agencées de façon continue dans une direction (A4) perpendiculaire à l'axe central (L2) dans le plan central (P2), et
une étape de division, consistant à diviser la pièce d'oeuvre principale (34), le long d'un plan (P4) perpendiculaire à la direction (A4) perpendiculaire à l'axe central (L2) dans le plan central (P2), en le nombre prédéterminé de pièces d'oeuvre (33) semi-finies.
